# EUROPEAN PATENT SPECIFICATION

(11) **EP 4 239 368 B1**
(45) Date of publication and mention of the grant of the patent: **23.07.2025**
(21) Application number: 23155378.5
(22) Date of filing: 07.02.2023
(51) Int. Cl.: G01S 13/88, G01F 1/002, G01F 1/663, G01F 15/063, G01F 23/80, G01D 4/00, G01F 23/284, G01S 7/00, G01S 13/58

(54) **APPRARATUS FOR IN SITU LEVEL AND FLOW MEASUREMENT**
VORRICHTUNG ZUR IN-SITU-FÜLLSTANDS- UND DURCHFLUSSMESSUNG
APPAREIL DE MESURE IN SITU DE NIVEAU ET DE DÉBIT

(30) Priority: 09.02.2022 GB 202201651
(43) Date of publication of application: 06.09.2023
(73) Proprietor: Pulsar Process Measurement Limited, Worcestershire WR14 1JJ (GB)
(72) Inventor: Ball, Stephen, Malvern WR14 1JJ (GB); Foo, Andrew, Malvern WR14 1JJ (GB); Perkins, Georgina, Malvern WR14 1JJ (GB)
(74) Representative: Barker Brettell LLP

(56) References cited:
- EP-A1- 2 023 327
- US-A- 6 014 100
- US-A1- 2002 064 011
- US-A1- 2005 168 379
- US-A1- 2017 199 066

## Description

The present invention relates to an apparatus for the measurement of the level or flow, or both, of a moving media in a channel. In particular, but not exclusively, apparatus may be used to determine at least the flow velocity of the media in the channel. Most preferably but not exclusively, the device may measure the velocity using Doppler radar velocity measurement techniques.

There are many different scenarios where it can be useful to measure the flow of a moving media or the level of the media. One example situation is in a sewer system, where measuring the flow or level of sewage can help locate blockages (from slow flow), predict pumping requirements in pumping stations, predict if spills are to occur, and estimate the amount of sewage spilled where spills do occur.

Typically, the flow can be determined by measuring the velocity and depth of the media. One technique used for measuring the velocity is Doppler radar.

Known Doppler radar devices have a control unit that can be located centrally and a measurement unit which is located remotely where the measurement is required. Doppler radar devices have high power consumption, and so the control unit is typically powered by mains power. Separate connections are used to provide power from the control unit to the measurement unit, and to communicate the measured velocity between the measurement unit and the control unit.

One common arrangement is to power and monitor the measurement unit using an analogue current loop having a single pair of conductors. A well-known example of such an arrangement is the industry standard field control loop. Measurement values are encoded by the value of the current flowing around the loop, for instance over the range of 4-20mA. In most field applications, the 4-20mA measurement unit is solely powered by the signalling current with a low current provided that is outside of the range of measured values to power the remote measurement unit.

An example of a lower power consumption measurement unit is disclosed in the applicant's earlier patent GB2546282B1. This teaches a measurement unit that has an energy store, the store being topped up by drawing a low current from the loop at times when measurements are not being made. Such an arrangement offers the benefit of requiring only a pair of wires to carry power to the device and to carry signals back from the device around the loop. In addition, the inherent power limitation meant that such instruments can be easily protected for use within explosive atmospheres.

Relying solely on signalling loop current for power means that the current available to the instrument can be very low. This is a challenge for non-contact level and velocity sensors based on ultrasonic or radar principles, as the instantaneous power requirement for taking a measurement often exceeds that which is available on the loop. Due to such power constraint, loop-powered ultrasonic and radar sensors are designed to use all available energy for the sole purpose of carrying out a measurement.

For these sensors, optimal installation is critical in ensuring accurate and robust measurement. For example, the optimal angle for measuring the level of a liquid will be when the face of the sensor is parallel with the liquid surface. On the other hand, the optimal installation for measuring level of solids may depend on a combination of factors such as the relative position of the fill inlet, the size of the solid material and the concentration of suspended solids.

Due to the power limitation on the loop, prior art analogue field loop devices do not provide in situ user feedback. Devices that do provide feedback achieve this by relying on an installer fitting an additional device to give indication and feedback to the user. In addition, the requirement to handle and monitor a separate device obfuscates the installer and often increases the time duration and number of human installers required to achieve optimal result.

To overcome this constraint, the present invention describes an apparatus which overcomes the limitations of the prior art analogue field loop devices.

According to a first aspect of the invention, there is provided apparatus for measuring at least one of the level and the velocity of a media in a channel, the apparatus including a remote measuring device which comprises:
a sensing unit having at least one sensing assembly arranged to measure at least one of the level and the velocity of the media,
a two-wire interface arranged to receive power from an external power source and
permit data transfer between the sensing assembly and an external control unit over the two-wire interface,
an energy store for storing energy transmitted to the measurement device over the two-wire interface,
a controller, and
characterised in the that the remote measuring device further comprising:
   an indicator means for providing in-situ feedback to a user on the status of the measuring device, and
   a switching means which is operable in response to signals from the controller to selectively connect each of the sensing unit and the indicator means to the energy store.

By selectively connect we mean the switching means can connect and disconnect the sensing unit or indicator means to the energy store, and that they may be connected or disconnected independently. When connected the energy store can supply energy required to operate the sensing assembly and the indicator means. Both may be disconnected at a given time, or just one connected, or both connected to the energy store under the control of the controller.

The provision of an in-situ indicator means as part of a remote measuring device that is powered by a two-wire interface for power transfer and data transfer assists a user in the correct installation of the measuring device and to ensure that this is maintained over the duration of the use of the measurement device without the need for any additional monitoring equipment.

The switching means may comprise a first switch that is connected in series between the energy store and the sensing unit and a second switch that is connected in series between the energy store and the indicator means. There may therefore be two switches, each operable between and open and a closed position.

The switching means may include a third switch which selectively connects the controller to the energy store.

The switching means may be configured such that one or all of the switches is normally open in the absence of a respective control signal from the controller such that with the controller disconnected from the energy store the sensing unit and the indicator means are disconnected from the energy store.

The switch, or each switch, may comprise a semiconductor junction.

The apparatus may further include a timer circuit which draws power from the energy store and which in use may be activated by the controller prior to the controller putting itself into a sleep mode, the timer circuit awakening the controller after a predetermined or dynamically determined period of time has elapsed.

The timer circuit may operate the third switch which selectively connects the controller to the energy store, and may be a real time clock. When the controller is in the sleep mode the third switch may be open to isolate the controller from the energy store.

The controller may comprise a micro-processor circuit. This may execute program instructions stored in an area of memory of the remote measuring device.

The controller may be configured such that the supply power to the measurement device and the indicator means are independently controlled, wherein the device is configured to switch between power up and power down of the sensor unit or the indicator means in response to at least one of : the quality of measurement output from the sensing apparatus, the power budget of the remote device and a user input.

The two-wire interface may be arranged to function with the well-known 4-20mA current loop standard. This may be compliant with one of the industrial standards for fieldbus configuration such as IEC 61784/61158 set by the International Electrotechnical Commission. The two-wire interface may include at least one terminal for connection to one wire of a loop and at least one further terminal for connection to a second wire of the loop.

The two-wire interface may be arranged to carry a variable current and rated for a maximum current which may be of the order of a few tens of milliamps. The current on the two-wire interface may be varied between a first current and a second current, both lower than the maximum current, to transfer data between the remote measuring device across the loop. The current on the two-wire interface may be higher than the second current to indicate an error message. The current on the two-wire interface may be higher than the second current when charging the energy store.

The current on the two-wire interface may be modulated when the external control unit is being used to configure the radar unit prior to use.

The feedback provided by the indicator means can take any form that can be interpreted by an installer without the requirement of an additional device.

The status may comprise the quality of the measurement signal, a typical indicator that the measurement unit is correctly installed. It may include the value of the measurement, in particular if the measurement is outside of a normal range. The status may include the level of charge of the energy store, in particular if the store has insufficient charge. The status may include one or more fault codes indicative of one or more faults with the remote measurement unit. The status may include an indication of the quality of the connection to the field loop, including any fault in the connection.

In one arrangement, the indicator means may include a visual indicator in the form of a light signal on the enclosure of the device. The light signal can be placed anywhere on the enclosure for best visibility to the user. Status information can be encoded and conveyed by all aspects of variation in the light signal. These include, but are not limited to, the brightness and intensity, the colour of the light, the sequence of the frequency of illumination and the duration of illumination.

Whilst the human eye can only perceive visible light, the scope of this invention includes the use of infrared red or ultraviolet light excitation. This may be perceived by a human operator wearing a visual aid that can respond to signals in the infrared and ultraviolet spectrum.

In another arrangement, the indicator means may include an audio indicator in the form of sound emitted by the device. Information can be encoded and conveyed by all aspects of variation in the sound signal. These include, but are not limited to, intelligible sound such as recorded speech, tone, pitch, or amplitude of the sound, as well as duration of and in between excitation.

In a still further arrangement, the indicator means may include a mechanical vibrator that induces vibration on the enclosure. Information can be encoded and conveyed by the intensity and the pattern of vibration, which include duration of vibration and the time interval between them.

In another arrangement, the indicator means may include a graphical user interface in particular an electronic paper display, such that information is conveyed via characters and symbols. With an electronic paper display, energy is only expended in changing the character and symbols on the display. The display will retain any characters or symbols even after power is removed.

The skilled person will understand that the indicator means may include a combination of any of the above arrangements

The applicant has appreciated that the excitation of the indicator means is likely to draw more power than the instantaneous power available from the two wire interface in particular if the sensing unit is operational at the same time.

To provide the energy required by the measurement unit and the indicator means the energy store may be sized to store sufficient energy to complete one cycle of operation of the indicator means and one cycle of operation of the measurement unit.

By way of example, the energy store may be a capacitive storage device.

The controller may be arranged to leave a minimum level of energy in the energy store, such that the measurement can be repeated without the energy store being replenished. The controller may be arranged to: omit a measurement if it is determined that the energy store does not have sufficient energy to power the radar module and leave the minimum level of energy in the energy store; and only charge the energy store during the first portion of the active period.

This ensures efficient use of the energy that can be supplied over the two wire loop.

The controller monitors and replenishes the power store from the loop by disabling power to the sensor transceiver and the indicators. The controller may also disable power to itself and transfer control to a timed trigger circuitry to maximise power saving.

The indicator means may be controlled by the controller so as to operate in an installation mode at a first instant and in a measurement mode at a second instant.

The controller may cause the indicator means to switching into installation mode in response to a command signal received across the two wire interface. This command signal may comprise a user input via digital modulation.

Alternatively, the command signal may be received by a wireless receiver of the apparatus having been transmitted over a wireless communication link.

Alternatively, the apparatus may be switched into installation mode by other forms of user input such as the motioning of the sensor in a pre-determined pattern.

The indicator means of the apparatus may be configured to automatically switch from an installation mode to the measurement mode after a configurable duration of inactivity or period of elapsed time.

During installation of the apparatus with the indicator means in the installation modes the indicator means may be used as a user feedback tool for optimisation of the installation.

When in the installation mode the controller may alternate between taking measurements using the measurement apparatus and providing feedback to the user using the indicator means, replenishing the power store in between. To achieve this the controller may operate the switches in an appropriate pattern to power up and then power down the measurement circuit and the indicator means.

The controller may monitor one or more parameters such as a received signal strength of an echo return versus distance to the target, and comparing this to expected signal strengths to determine if the installation is optimal, followed by a session of indicator activation to convey the information.

The apparatus may include a tilt sensor which is a part of the remote measurement device that indicates the angular orientation of the sensing circuit and the indicator means may provide an indication of the status based on angle of installation, or a weighted combination of signal strength and tilt angle may be used.

The tilt sensor may be an accelerometer.

The apparatus may include an external control unit which is connected to the measurement device through the two wire interface and in use may be sited at a location remote from the measurement device.

The external control unit may include or be connected to a power supply for providing power to the remote measuring device over the two wire interface, and powering operation of the remote measuring device. The power supply may be a rechargeable power supply. The power supply may be a battery.

The external control unit may be arranged to transmit command signals to the remote device that are received by the controller of the remote device.

The external control unit and the remote device may be configured in use to cycle through the following modes in the order shown or in an alternative order:
Mode (a) -apply a current to the interface that is below the range of currents used to encode the value measured by the measurement device, e.g. below 4mA, and the controller isolates the indicator means and the measurement apparatus to direct the charge to the energy store;
Mode (b)- the controller connects the energy store to the measurement apparatus with the indicator means disconnected such that the measurement device measures the flow rate or level of a media and applies a current to the two wire interface that is indicative of the value of the measurand,
Mode (c)- the controller isolates the measurement apparatus from the energy store and connects the indicator means to the energy store, the indicator means providing user feedback of status or Mode (d) feedback on the quality of an installation.

The remote measurement device may therefore have a charge mode, a measurement mode, an indicator mode, and an installation mode.

The controller alternates between taking measurement and providing in situ indication, replenishing the power store in between.

The entry and exit of a mode may be instructed by the external control unit, communicating with the controller of the remote measurement unit by appropriate selection or modulation of the current applied to the loop wires.

Intermittent measurement of the measurand, e.g., velocity or level, or both velocity and level, and operation of the indicator means with a period of charging of the energy store in between ensures the remote device has sufficient energy to operate for an extended period.

The control unit may be arranged to determine the duration of each mode in the cycle as a function of the level or velocity measurements based on one or more of: a default value, a user input, and one or more previous velocity measurements.

During installation, when the controller of the remote unit has placed the remote measurement unit into an installation mode, the external control unit may set the loop current to a maximum. The controller may at that time take measurements from the measurement apparatus but not signal any values on the two wire interface, measurement information instead may be conveyed using the indicator means.

During measurement mode (b), the current on the two wire interface is set by the controller of the remote device to be a function of the measurement value, whilst the indicator means provides in situ updates on device status and application condition.

An alert region may be defined as a range of values in which the measured level or velocity warrants further attention by the user or the control system. The alert region may be pre-determined or adaptive. The alert region may be scaled to correspond with higher current in the loop to maximise available power whilst operating in alert conditions.

If the velocity or level is deemed to be far or rapidly moving away from the alert region, the controller may reduce frequency of measurement. The controller may also cut off power to itself and transfer control to a very low power timer circuitry that will restart the controller at pre-set intervals. This mechanism enables excess capacity in the power store to be filled up. The controller monitors the velocity or level, and as application condition approaches the alert region, the frequency of measurement and status indication may be increased by means of the higher signalling current on the loop and drawing on the availability of excess power..

The sensor assembly may comprise a radar module that measures level or the flow, or both level and flow by reflection of radar signal from the surface of the media in a conduit.

The radar module may include radar means having: means for transmitting microwaves; means for detecting microwaves reflected from the moving media; and means for determining the velocity of the media based on the reflected microwaves, wherein the radar module is powered by the energy store.

In another example, the sensor transceiver may be an ultrasonic transceiver.

According to a second aspect the invention provides a method of operation of the apparatus of the first aspect in which the controller monitors and replenishes the energy store from the two-wire interface by disabling power to the sensor unit and the indicator means.

The method may further comprise disabling power to the controller and transfer control to a timed trigger circuitry to maximise power saving, the method returning power to the controller after the timed trigger circuit has determined an elapsed time.

The method may comprise operating the indicator means in two modes: installation and measurement. Switching into installation mode may be carried out by user input via digital modulation on the loop or over a wireless communication link. Alternatively, the sensor may be switched into installation mode by other forms of user input such as the motioning of the sensor in a pre-determined pattern, then automatically returning to measurement mode after a configurable duration of inactivity.

During sensor installation in the installation mode, the method may comprise using the indicator means as a user feedback tool for optimisation of the quality of the installation.

The method may comprise using measurement parameters such as received signal strength from the sensor unit versus distance to the media measured to determine if the installation is optimal, followed by a session of indicator activation to convey the information. Other criteria based on angle of installation, or a weighted combination of signal strength and tilt angle may be used.

The method may comprise setting the loop current to maximum during operation in the installation mode and disabling signalling on the loop. The method may then comprise conveying measurement information using the indicator means.

During operation in the measurement mode, the method may comprise setting the loop current to be proportional to the measurement value, whilst the indicator means provides updates on device status and application condition.

The invention will now be described, by way of example only, with reference to the accompanying drawings, in which:
**Figure 1** schematically illustrates a channel including a device for measuring the flow of media in the channel;
**Figure 2** schematically illustrates a first embodiment of an apparatus according to a first aspect of the invention;
**Figure 3** is shows in more detail the functional parts of the remote measurement unit of the apparatus of Figure 2;
**Figure 4** shows in more detail the functional parts of the external control unit of the apparatus of Figure 2;
**Figure 5** shows the current applied to the loop during a charging mode;
**Figure 6** shows the current applied to the loop during a measurement mode;
**Figure 7** shows the current applied to the loop during an installation mode; and

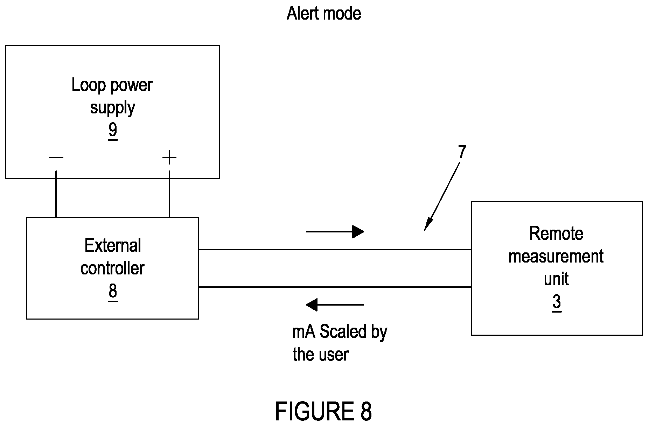

**Figure 8** shows the current applied to the loop during an alert mode

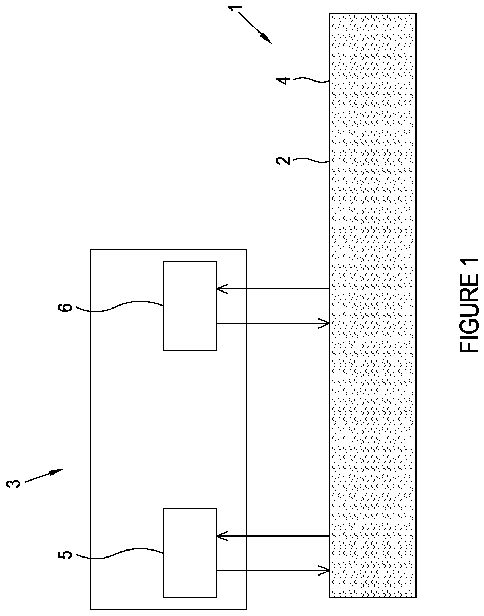

Figure 1 shows a schematic illustration of a channel 1 carrying a flowing media 2, such as water. A remote measuring device 3 is positioned in the channel 1, above the water surface 4, to measure in this embodiment the flow rate of the water 3. The remote measuring device 3 includes a sensing assembly which in this example has two sensor devices. The first sensor assembly 5 is a level measurement device, and the second sensor assembly 6 is a velocity measurement device. Both level and velocity measurement assemblies may be combined to form a single device, or the flow measurement device may measure only level or only flow.

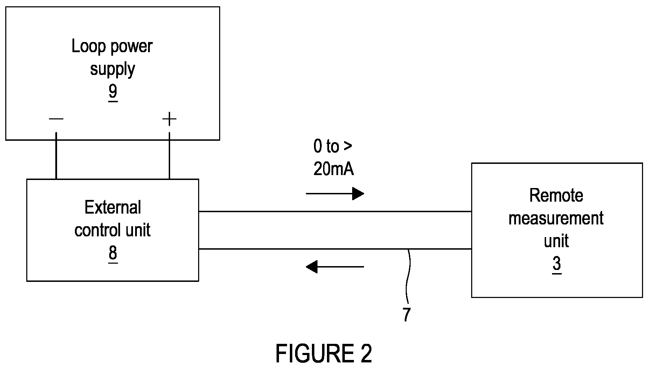

Figure 2 shows the inclusion of the remote measuring device 3 in a complete measurement apparatus. The remote measuring device 3 is connected by a two-wire field loop 7 to an external control unit 8 which is in turn connected to a loop power supply 9. The two wires of the loop 7 carry power and signals to and from the remote measuring device 3 allowing the external control unit 8 to be located at a more convenient central location. In this example the two-wire loop is 7 configured in accordance with the IEC standard for fieldbus configuration IEC 61784/61158 set by the International Electrotechnical Commission. The loop power supply 9 provides a constant voltage, for example 24 volts, with the external controller and the remote measuring device setting the current in the loop 7. In use, power for the remote measuring device 3 is supplied across the loop 7 and any measurements made by the remote measuring device 3 are communicated across the loop 7 to the external control unit 8 using analogue current amplitude modulation.

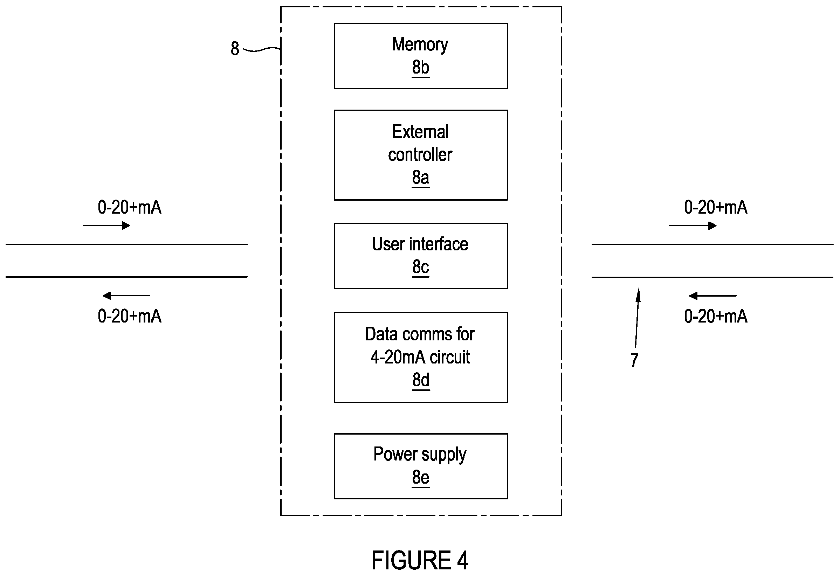

Figure 4 shows the main components of the external control unit 8. It comprises a controller 8a, a memory 8b which stores instructions, a user interface 8c through which a user can operate the external control unit 8, the controller 8a including a microprocessor for computational calculations, data communication means 8d to receive instruction and transmit data, and a power source 8e.

The user interface 8c also allows for output of the measurements taken by the measuring device 3 to the user. Optionally, information on device status may also be provided through the user interface 8c. In addition to or instead of the user interface, the external control unit 8 may comprise a wireless communications interface that allows output of the measurement information, and optionally device status, by wireless communications means.

Various wireless communications technologies may be used. For example, the wireless communications interface may use short range communications technologies such as WiFi, BTLE, RFID, BlueTooth, Digital Enhanced Cordless Telecommunications (DECT) or ZigBee. Alternatively, longer range communications technologies such as 3G, 4G or 5G signals and other cellular signals may be used.

In the case of short range communications technologies, the power of any transmitter in the external control unit 8 may be controlled to modify the range of the communications. This may provide an additional security feature, ensuring that only users within a defined geographic area can access the signals. For example, where the remote measuring device 3 and external unit 8 are provided in a pumping station, the power of the transmitter may be set so that only users within the pumping station can access the signal.

Further encryption and other security measures may be used.

The use of short and/or long-range wireless communications allows the user interface to be presented to a user through a separate device, such as a tablet, mobile phone, computer or the like. Users may alo provide input through any such device, in a similar manner to how they would provide input through the user interface 8c.

The user interface 8c may also be presented to a remote user by connection of the external control unit to an external network such as the internet.

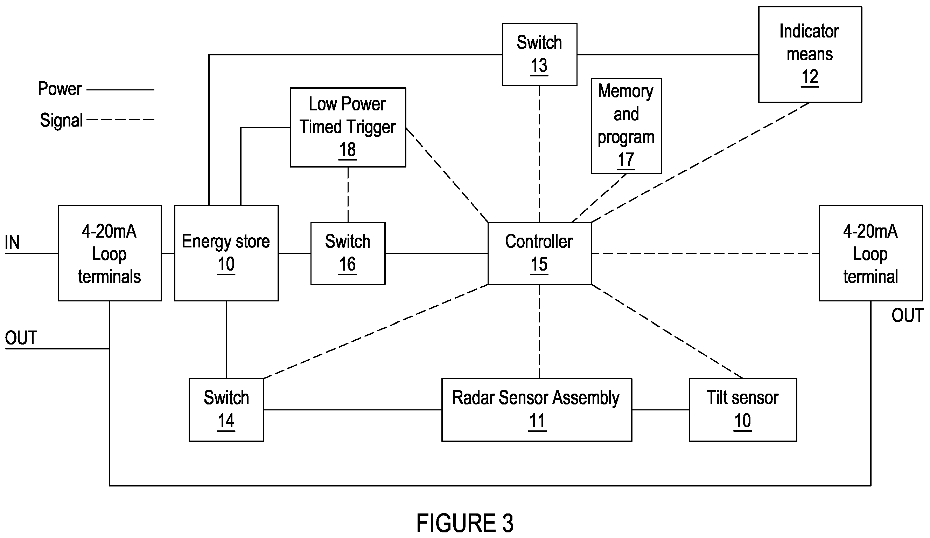

Figure 3 shows the remote measuring device 3 in more detail. Each block in Figure 3 represents a key functional part of the device, with a solid line between blocks representing a path along which the part can draw power or supply power to other functional parts. A dashed line represents a path along which control signals or measurement data can be passed between blocks either unidirectionally or bidirectionally. The skilled person will appreciate that a common conductor could be used to carry both power and for signalling or measurements. All the parts shown may be located within a common housing (not shown) to protect them from the environment.

The device 3 comprises an energy store 10 which is connected to the two wires of the field loop 7 and thereby back to the external control unit 8. The energy store 10 will charge up when the current flowing from the external control unit 8 to the energy store 10 exceeds the total instantaneous power consumption of the functional parts of the remote measuring device 2. When no current is supplied, or at any other time when the power consumed by the remote device 3 exceeds that which can be drawn at that time from the loop 7, the energy in the energy store 10 will deplete. The purpose of the energy store 10 is to enable more instantaneous power to be drawn by the remote device 3, in particular the power-hungry sensor apparatus, than is available over the field loop 7.

The remote measuring device 3 also includes one or both of the sensor assemblies 5, 6 shown in Figure 1. This is indicated in Figure 3 as a radar sensor assembly 11 in this example that measures the level of the fluid.

In addition to the sensor assembly 11 the device 3 includes an indicator means 12. This comprises in this example a single multi-colour light emitting diode and a driver. The colour, intensity of light emitted by the indicator means 12 can be modulated to provide status or installation information as will be explained hereinafter.

The radar sensor assembly 11 and the indicator means 12 are each selectively connected to the energy store 10 by respective switches. A first switch 13 when closed supplies power to the indicator driver of the indicator means 12. A second switch 14 when closed provides power to the radar sensor assembly 11.

The heart of the remote device is a controller 15. This may comprise a microcontroller, a remote memory and a set of instructions stored in the remote memory that may be executed by the controller. The controller 15 is connected to the energy store 10 through a third switch 16 when the switch is closed. The controller comprises a microprocessor which when drawing power from the energy store 10 executes program instructions stored in an area of memory 17.

The controller performs several functions:
- to manage the energy in the energy store by controlling switches that selectively connect the controller, the sensor apparatus and the indicator means to the energy store (charging mode);
- to receive measurement values from the sensor apparatus and set a loop current that is a function of the measurement value thereby to communicate back to the external controller (a measurement mode); and
- to drive the indicator means that provides status information (indicator mode) and assists a user in the installation of the device (installation mode).

Each of these functions is described in detail below.

### Energy store management (charging mode).

The energy store 10 is permanently connected to the loop 7 and in a charging mode is disconnected from the sensor apparatus 11 and the indicator means 12 by the controller 15 opening the switches 14 and 13. The controller 15 enters this mode when it determines that the energy in the energy store 10 has dropped below a predefined threshold. It may also enter this mode in response to a defined current being detected on the loop 7, allowing the external control unit 8 to force entry to this mode. The mode may also be entered as part of a cycle through the other modes, for instance this mode may be entered on exiting the measurement mode or on exiting the indicator mode of installation mode.

The controller 15 may maintain the charging mode until the energy stored in the energy store 10 exceeds a predetermined upper threshold, for example an 80 percent charge of the energy store 10.

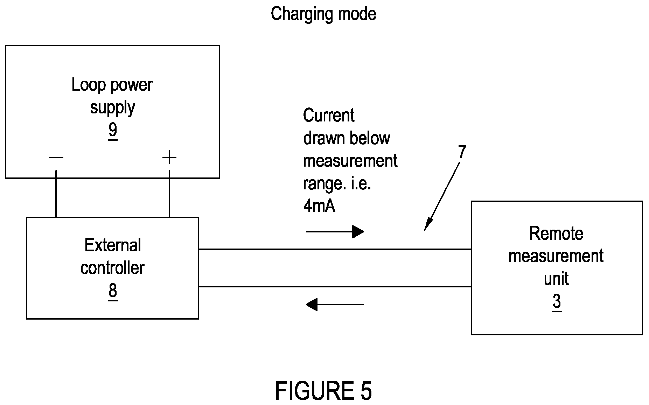

In the charging mode the controller 15 does not communicate with the indicator means 12 or the radar sensor assembly 11. The controller 15 may remain connected to the energy store 10 when in this mode. The external control unit 8 applies a maximum current to the loop 7 when in this mode as shown in Figure 5.

### Measurement Mode

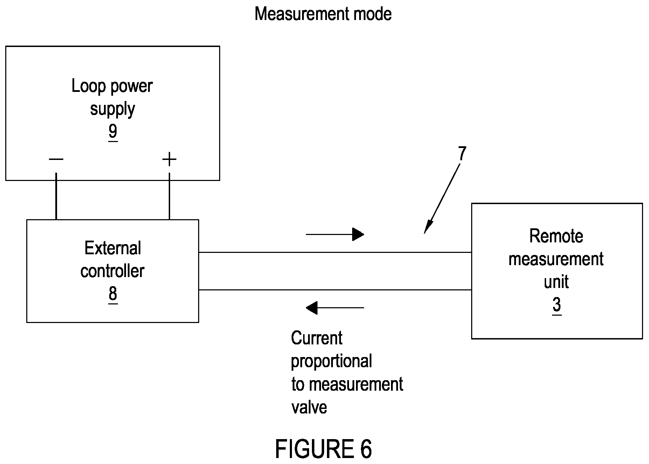

In this mode the controller 15 closes the switch 14 to connect the radar sensor assembly 12 to the energy store 10. When this happens the radar sensor assembly 11 will continuously or intermittently transmit a signal to the controller 15 indicative of a value of the measurement that is made, for example a digital signal encoding the level of the media or encoding the flow rate. The controller 15 receives this signal and sets an appropriate current at the output terminal of the loop 7, the current set being in the range 4mA to 20mA and proportional to the value of the measurement. This is shown in Figure 6. The external control unit detects and converts this current to a voltage signal, for instance by measuring the voltage dropped across a fixed resistance in series with the loop wire returning from the remote measurement device 3.

During the measurement mode the indicator means 12 is isolated from the energy store by opening the switch 13. This ensures that the indicator means 12 does not draw energy from the energy store 10 during the measurement mode.

### Indicator Mode

Entry to this mode is achieved by the controller 15 closing the switch 13 to connect the indicator means 12 to the energy store 10 and opening the switch 14 to isolate the radar sensor assembly 11 from the energy store 10 if that switch is not already open. The controller 15 sends control signals to the driver of the indicator means causing the LED to be modulated to encode status information that can be viewed by a user, such as the health of the energy store 10, state of charge, fault codes if a fault has been detected by the controller and so on. No measurements are made in this mode, and energy may be drawn from the energy store 10 and from any current set on the loop by the external control unit 8.

### Installation Mode.

In this mode, the switches 13 and 14 are set by the controller 15 so that both the radar sensor assembly 11 and the indicator means are connected to the energy store 10 at the same time. In this mode, the controller 15 takes readings of the inclination of the measurement device 3 from a tilt sensor 17 built into the remote measuring device 3 and from radar sensor assembly 11 to determine the quality of the measurement signal, e.g., the signal strength. The controller 15 then commands the indicator means 12 to output information by modulating the LED that assists a user in setting up the measurement device correctly. This may comprise, for example, a pass or fail signal with a pass being indicated when the measuring device is correctly installed and a fail when it is not. The colour of the LED may be set to red for a fail and green for a pass, or some other encoding strategy may be used.

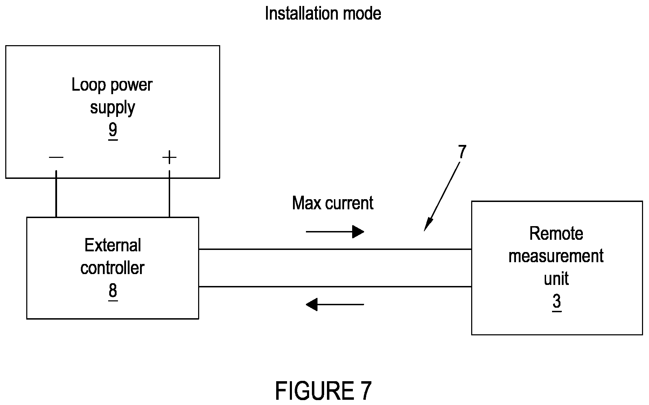

To conserve the energy in the energy store the external control unit 8 may at this time set the loop current to a maximum value, for example in excess of 20mA, and the signalling on the loop is disabled. Any measurement information obtained in that mode may be conveyed using the indicator means. This is shown in Figure 7.

It will be apparent from the above description that the external control unit 8 behaves as a master, and controls the operation of the remote measurement unit 3, as a slave. In particular, the external control unit 8 may control when the remote measurement unit 3 enters each of the modes of operation. The operation of the external control unit 8, and hence the remote measurement unit 3 as a whole is managed by the external control unit 8.

Switching into installation mode may be carried out by user input via digital modulation on the loop 7 or over a wireless communication link. Alternatively, the remote measurement unit may be switched into installation mode by other forms of user input such as the motioning of the unit in a pre-determined pattern which is detected by the tilt sensor, then automatically returning to measurement mode after a configurable duration of inactivity.

During installation of the measurement device 3, the indicator LED is used as a user feedback tool for optimisation. The controller 15 alternates between taking measurement and providing feedback to the user, replenishing the energy store 10 in between. Measurement parameters such as received signal strength versus distance may be utilised to determine if the installation is optimal, followed by a session of indicator activation to convey the information. Other criteria based on angle of installation, or a weighted combination of signal strength and tilt angle may be used.

### Alert mode

An optional alert mode may also be selected by the controller. This mode is entered whenever the value measured by the radar sensor assembly enters an alert region defined as a range of values in which the measured level or velocity warrants further attention by the user or the control system. The alert region may be pre-determined or adaptive. The alert region may be scaled to correspond with higher current in the loop to maximise available power whilst operating in alert conditions For example, for a device measuring level which can vary over a range of 0 to 3 metres, the 4 to 20 mA available will be scaled accordingly, i.e. 0 metre => 4 mA, and 3 metres => 20 mA. This is fine if 2.5 to 3 metres is the alert region, as the device will be indicating close to 20 mA and so plenty of current on the loop to use. However, in applications where 0 to 0.5 m is the alert region, then the loop will only have around 4 mA, which is very restrictive. To get around this, one can reverse the scaling so 0 to 3 metres is proportional from 20 mA to 4 mA instead, i.e. 0 metre => 20 mA, and 3 metre => 4 mA. The ensures power is maximised when in the alert region in each situation.

If the velocity or level is deemed to be far or rapidly moving away from the alert region, the controller may reduce frequency of measurement. The controller may also cut off power to itself and transfer control to a very low power timer circuitry that will restart the controller at pre-set intervals. This mechanism enables excess capacity in the power store to be filled up. The controller monitors the velocity or level, and as application condition approaches the alert region, the frequency of measurement and status indication may be increased with the higher signalling current on the loop and excess power storage.

### Sleep mode

A further optional mode that may be selected by the controller 15 is a sleep mode. In this mode the controller 15 initiates a low power timed trigger 18 and immediately after, or coincident with this, opens the switch 16 to disconnect power to the controller and opens the switches 13 and 14. The energy store in this mode is only connected to the low power timed trigger 18. The trigger counts until a predefined count value corresponding to a predefined elapsed time, or to a count value that may be set dynamically by the controller on initiating the trigger. Once the trigger count value is reached, the switch 16 is opened to reconnect power to the controller 15. This awakens the controller from the sleep mode.

## Claims

1. Apparatus for measuring at least one of the level and the velocity of a media (2) in a channel (1), the apparatus including a remote measuring device (3) which comprises:
a sensing unit (11) having at least one sensing assembly (5, 6) arranged to measure at least one of the level and the velocity of the media (2),
a two-wire interface (7) arranged to receive power from an external power source (9) and permit data transfer between the sensing assembly (5, 6) and an external control unit (8) over the two-wire interface (7),
an energy store (10) for storing energy transmitted to the measurement device (3) over the two-wire interface (7),
a controller (15), and
**characterised in that** the remote measuring device (3) further comprises:
an indicator means (12) for providing in-situ feedback to a user on the status of the measuring device (3), and
a switching means (13, 14, 16) which is operable in response to signals from the controller (15) to selectively connect each of the sensing unit (11) and the indicator means (12) to the energy store (10).

2. Apparatus according to claim 1 in which the switching means (13, 14, 16) comprises a first switch (13) that is connected in series between the energy store (10) and the sensing unit (11) and a second switch (14) that is connected in series between the energy store (10) and the indicator means (12).

3. Apparatus according to claim 1 or claim 2 in which the switching means (13, 14, 16) is configured such that one or all of the switches (13, 14, 16) are normally open in the absence of a respective control signal from the controller (15) such that with the controller (15) disconnected from the energy store (10) the sensing unit (11) and the indicator means (12) are disconnected from the energy store (10).

4. Apparatus according to any preceding claim which further includes a timer circuit which draws power from the energy store (10) and which in use may be activated by the controller (15) prior to the controller (15) putting itself into a sleep mode, the timer circuit awakening the controller (15) after a predetermined or dynamically determined period of time has elapsed.

5. Apparatus according to claim 4 in which the timer circuit includes a third switch (16) which selectively connects the controller (15) to the energy store (10) configured such that when the controller (15) is in the sleep mode the third switch (16) is open to isolate the controller (15) from the energy store (10).

6. Apparatus according to any preceding claim in which the two-wire interface (7) is arranged to function with the well-known 4-20mA current loop standard.

7. Apparatus according to any preceding claim in which the feedback provided by the indicator means (12) is in a form that can be interpreted by an installer without the requirement of an additional device.

8. Apparatus according to any preceding claim in which the indicator means (12) includes one or more of:
- a visual indicator in the form of a light signal on the enclosure of the device (3);
- an audio indicator in the form of sound emitted by the device (3); and
a graphical user interface in particular an electronic paper display, such that information is conveyed via characters and symbols; and
- a mechanical vibrator that induces vibration on the enclosure.

9. Apparatus according to any preceding claim in which the indicator means (12) is controlled by the controller (15) so as to operate in an installation mode at a first instant and in a measurement mode at a second instant.

10. Apparatus according to claim 9 in which the controller (15) is configured to cause the indicator means (12) to switch into the installation mode in response to a command signal received across the two wire interface (7) or to a command signal received by a wireless receiver of the apparatus having been transmitted over a wireless communication link.

11. Apparatus according to any preceding claim which further includes an external control unit (8) which is connected to the measurement device (3) through the two wire interface (7) and in use may be sited at a location remote from the measurement device (3).

12. A method of operation of the apparatus of any one of claims 1 to 11 in which the controller (15) monitors and replenishes the energy store (10) from the two-wire interface (7) by disabling power to the sensor unit (11) and the indicator means (12).

13. The method of claim 12 further comprising disabling power to the controller (15) and transferring control to a timed trigger circuitry to maximise power saving, the method returning power to the controller (15) after the timed trigger circuit has determined an elapsed time.

14. The method of claim 12 or claim 13 comprising during sensor installation in the installation mode using the indicator means (12) as a user feedback tool for optimisation of the quality of the installation.

15. The method of any one of claims 12 to 14 comprising one or more of the following steps:
processing measurement parameters such as received signal strength from the sensor unit (11) versus distance to the media (2) measured to assist the user in determining if the installation is optimal, followed by a session of indicator (12) activation to convey the information;
setting the loop current to maximum during operation in the installation mode and disabling signalling on the loop; and
during operation in a measurement mode setting the loop current to be proportional to the measurement value, whilst the indicator means (12) provides updates on device (3) status and application condition.

## Patentansprüche

1. Einrichtung zum Messen von mindestens einem des Pegels und der Geschwindigkeit eines Mediums (2) in einem Kanal (1), wobei die Einrichtung eine Fernmessvorrichtung (3) umfasst, die umfasst:
eine Sensoreinheit (11), die mindestens einer Sensorbaugruppe (5, 6) aufweist, die angeordnet ist, um mindestens eines des Pegels und der Geschwindigkeit des Mediums (2) zu messen,
eine Zweidrahtschnittstelle (7), die angeordnet ist, um Leistung von einer externen Leistungsquelle (9) zu empfangen und eine Datenübertragung zwischen der Sensorbaugruppe (5, 6) und einer externen Steuereinheit (8) über die Zweidrahtschnittstelle (7) zu ermöglichen,
einen Energiespeicher (10) zum Speichern von Energie, die an die Messvorrichtung (3) über die Zweidrahtschnittstelle (7) übertragen wird,
eine Steuerung (15), und
**dadurch gekennzeichnet, dass** die Fernmessvorrichutng (3) ferner umfasst:
ein Indikatormittel (12) zum Bereitstellen einer In-situ-Rückmeldung an einen Benutzer über den Status der Messvorrichtung (3), und
ein Schaltmittel (13, 14, 16), das als Reaktion auf Signale von der Steuerung (15) betriebsfähig ist, um jedes der Sensoreinheit (11) und des Indikatormittels (12) mit dem Energiespeicher (10) wahlweise zu verbinden.

2. Einrichtung nach Anspruch 1, wobei das Schaltmittel (13, 14, 16) einen ersten Schalter (13), der zwischen dem Energiespeicher (10) und der Sensoreinheit (11) in Reihe geschaltet ist, und einen zweiten Schalter (14), der zwischen dem Energiespeicher (10) und dem Indikatormittel (12) in Reihe geschaltet ist, umfasst.

3. Einrichtung nach Anspruch 1 oder 2, wobei das Schaltmittel (13, 14, 16) derart konfiguriert ist, dass einer oder alle der Schalter (13, 14, 16) normalerweise bei der Abwesenheit eines entsprechenden Steuersignal von der Steuerung (15) geöffnet sind, derart, dass wenn die Steuerung (15) von dem Energiespeicher (10) getrennt ist, die Erfassungseinheit (11) und das Indikatormittel (12) von dem Energiespeicher (10) getrennt sind.

4. Einrichtung nach einem der vorstehenden Ansprüche, die ferner eine Zeitgeberschaltung einschließt, die Leistung aus dem Energiespeicher (10) abzieht, und die in Verwendung durch die Steuerung (15) aktiviert werden kann, bevor die Steuerung (15) sich selbst in einen Ruhemodus versetzt, wobei die Zeitgeberschaltung die Steuerung (15) nachdem eine vorbestimmte oder dynamisch bestimmten Zeitspanne abgelaufen ist, aufweckt.

5. Einrichtung nach Anspruch 4, wobei die Zeitgeberschaltung einen dritten Schalter (16) einschließt, der die Steuerung (15) mit dem Energiespeicher (10) wahlweise verbindet, und der derart konfiguriert ist, dass, wenn die Steuerung (15) in dem Ruhemodus ist, der dritte Schalter (16) geöffnet ist, um die Steuerung (15) von dem Energiespeicher (10) zu isolieren.

6. Einrichtung nach einem der vorstehenden Ansprüche, wobei die Zweidrahtschnittstelle (7) angeordnet ist, um mit dem bekannten 4-20 mA-Stromschleifenstandard zu funktionieren.

7. Einrichtung nach einem der vorstehenden Ansprüche, wobei die durch das Indikatormittel (12) bereitgestellte Rückmeldung in einer Form vorliegt, die durch einen Installateur interpretiert werden kann, ohne dass eine zusätzliche Vorrichtung erforderlich ist.

8. Vorrichtung nach einem der vorstehenden Ansprüche, wobei das Indikatormittel (12) eines oder mehrere einschließt von:
- einem optischen Indikator in Form eines Lichtsignals an dem Gehäuse der Vorrichtung (3);
- einem Audioindikator in Form eines Tons, der durch die Vorrichtung (3) emittiert wird; und
eine grafische Benutzerschnittstelle, insbesondere eine elektronische Papieranzeige, derart, dass Informationen über Zeichen und Symbole übermittelt werden; und
- einem mechanischen Vibrator, der Vibrationen an dem Gehäuse induziert.

9. Einrichtung nach einem der vorstehenden Ansprüche, wobei das Indikatormittel (12) durch die Steuerung (15) gesteuert wird, um in einem Installationsmodus zu einem ersten Zeitpunkt und in einem Messmodus zu einem zweiten Zeitpunkt zu arbeiten.

10. Einrichtung nach Anspruch 9, wobei die Steuerung (15) konfiguriert ist, um zu bewirken, dass das Indikatormittel (12) in den Installationsmodus umschaltet, als Reaktion auf ein Befehlssignal, dass über die Zweidrahtschnittstelle (7) empfangen wird, oder auf ein Befehlssignal, das durch einen drahtlosen Empfänger der Einrichtung empfangen wird, das über einen drahtlosen Kommunikationslink übertragen wurde.

11. Einrichtung nach einem der vorstehenden Ansprüche, die ferner eine externe Steuereinheit (8) einschließt, die mit der Messvorrichtung (3) durch die Zweidrahtschnittstelle (7) verbunden ist und in Verwendung an einem Ort, der von der Messvorrichtung (3) entfernt ist, platziert werden kann.

12. Verfahren zum Betreiben der Einrichtung nach einem der Ansprüche 1 bis 11, wobei die Steuerung (15) den Energiespeicher (10) von der Zweidrahtschnittstelle (7) durch Blockieren der Leistung zu der Sensoreinheit (11) und zu dem Indikatormittel (12) überwacht und auffüllt.

13. Verfahren nach Anspruch 12 ferner umfassend das Blockieren von Leistung zu der Steuerung (15) und das Übertragen der Steuerung auf eine zeitgesteuerte Auslöseschaltlogik, um die Leistungseinsparung zu maximieren, wobei das Verfahren die Leistung an die Steuerung (15) wieder herstellt, nachdem die zeitgesteuerte Auslöseschaltung eine verstrichene Zeit bestimmt hat.

14. Verfahren nach Anspruch 12 oder 13, umfassend, während der Sensorinstallation in dem Installationsmodus, das Verwenden des Indikatormittels (12) als ein Benutzer-Rückmeldungshilfsmittel für die Optimierung der Qualität der Installation.

15. Verfahren nach einem der Ansprüche 12 bis 14, umfassend einen oder mehrere der folgenden Schritte:
Verarbeiten von Messparametern, wie der empfangenen Signalstärke von der Sensoreinheit (11) im Vergleich zu dem gemessenen Abstand zu dem Medium (2), um dem Benutzer bei dem Bestimmen zu helfen, ob die Installation optimal ist, gefolgt von einer Sitzung für die Aktivierung des Indikators (12), um die Informationen zu übermitteln;
Einstellen des Schleifenstroms auf Maximum während des Betriebs in dem Installationsmodus und Blockieren der Signalisierung auf der Schleife; und
während des Betriebs in einem Messmodus, Einstellen des Schleifenstroms, um proportional zu dem Messwert zu sein, während das Indikatormittel (12) Aktualisierungen über den Status der Vorrichtung (3) und den Anwendungszustand bereitstellt.

## Revendications

1. Appareil pour la mesure d'au moins l'un parmi le niveau et la vitesse d'une voie (2) dans un canal (1), l'appareil comportant un dispositif de mesure à distance (3) qui comprend :
une unité de détection (11) ayant au moins un ensemble de détection (5, 6) agencé pour mesurer au moins l'un parmi le niveau et la vitesse de la voie (2),
une interface bifilaire (7) agencée pour recevoir une alimentation à partir d'une source d'alimentation externe (9) et permettre un transfert de données entre l'ensemble de détection (5, 6) et une unité de commande externe (8) via l'interface bifilaire (7),
un accumulateur d'énergie (10) pour l'accumulation de l'énergie transmise au dispositif de mesure (3) via l'interface bifilaire (7),
un dispositif de commande (15), et
**caractérisé en ce que** le dispositif de mesure à distance (3) comprend en outre :
un moyen indicateur (12) pour la fourniture d'une rétroaction *in situ* à un utilisateur sur l'état du dispositif de mesure (3), et
un moyen interrupteur (13, 14, 16) qui peut être actionné en réponse à des signaux provenant du dispositif de commande (15) pour connecter sélectivement chacun de l'unité de détection (11) et du moyen indicateur (12) à l'accumulateur d'énergie (10).

2. Appareil selon la revendication 1 dans lequel le moyen interrupteur (13, 14, 16) comprend un premier interrupteur (13) qui est connecté en série entre l'accumulateur d'énergie (10) et l'unité de détection (11) et un deuxième interrupteur (14) qui est connecté en série entre l'accumulateur d'énergie (10) et le moyen indicateur (12).

3. Appareil selon la revendication 1 ou la revendication 2 dans lequel le moyen interrupteur (13, 14, 16) est conçu de telle sorte qu'un ou tous les interrupteurs (13, 14, 16) sont normalement ouverts en l'absence d'un signal de commande respectif provenant du dispositif de commande (15) de telle sorte qu'avec le dispositif de commande (15) déconnecté de l'accumulateur d'énergie (10) l'unité de détection (11) et le moyen indicateur (12) sont déconnectés de l'accumulateur d'énergie (10).

4. Appareil selon l'une quelconque revendication précédente qui comporte en outre un circuit temporiseur qui tire une alimentation de l'accumulateur d'énergie (10) et qui en cours d'utilisation peut être activé par le dispositif de commande (15) avant que le dispositif de commande (15) ne se mette dans un mode veille, le circuit temporiseur réveillant le dispositif de commande (15) après qu'un laps de temps prédéterminé ou déterminé de manière dynamique s'est écoulé.

5. Appareil selon la revendication 4 dans lequel le circuit temporiseur comporte un troisième interrupteur (16) qui connecte sélectivement le dispositif de commande (15) à l'accumulateur d'énergie (10) conçu de telle sorte que lorsque le dispositif de commande (15) est dans le mode veille le troisième interrupteur (16) est ouvert pour isoler le dispositif de commande (15) de l'accumulateur d'énergie (10).

6. Appareil selon l'une quelconque revendication précédente dans lequel l'interface bifilaire (7) est agencée pour fonctionner avec la norme boucle de courant 4-20 mA bien connue.

7. Appareil selon l'une quelconque revendication précédente dans lequel la rétroaction fournie par le moyen indicateur (12) est sous une forme qui peut être interprétée par un installateur sans la nécessité d'un dispositif supplémentaire.

8. Appareil selon l'une quelconque revendication précédente dans lequel le moyen indicateur (12) comporte un ou plusieurs parmi :
- un indicateur visuel sous la forme d'un signal lumineux sur le boîtier du dispositif (3) ;
- un indicateur audio sous la forme d'un son émis par le dispositif (3) ; et
une interface utilisateur graphique en particulier un écran papier électronique, de telle sorte que des informations sont transportées par le biais de caractères et de symboles ; et
- un vibrateur mécanique qui induit des vibrations sur le boîtier.

9. Appareil selon l'une quelconque revendication précédente dans lequel le moyen indicateur (12) est commandé par le dispositif de commande (15) de façon à être actionné dans un mode installation à un premier instant et dans un mode mesure à un second instant.

10. Appareil selon la revendication 9 dans lequel le dispositif de commande (15) est conçu pour amener le moyen indicateur (12) à passer dans le mode installation en réponse à un signal de commande reçu par l'interface bifilaire (7) ou à un signal de commande reçu par un récepteur sans fil de l'appareil ayant été transmis via une liaison de communication sans fil.

11. Appareil selon l'une quelconque revendication précédente qui comporte en outre une unité de commande externe (8) qui est connectée au dispositif de mesure (3) à travers l'interface bifilaire (7) et qui en cours d'utilisation peut être située à un endroit à distance du dispositif de mesure (3).

12. Procédé d'actionnement de l'appareil selon l'une quelconque des revendications 1 à 11 dans lequel le dispositif de commande (15) surveille et réapprovisionne l'accumulateur d'énergie (10) à partir de l'interface bifilaire (7) en coupant l'alimentation de l'unité détectrice (11) et du moyen indicateur (12).

13. Procédé selon la revendication 12 comprenant en outre la coupure de l'alimentation du dispositif de commande (15) et le transfert de la commande à une circuiterie de déclenchement temporisé pour maximiser l'économie d'alimentation, le procédé rétablissant l'alimentation du dispositif de commande (15) après que le circuit de déclenchement temporisé a déterminé un temps écoulé.

14. Procédé selon la revendication 12 ou la revendication 13 comprenant pendant l'installation détectrice dans le mode d'installation l'utilisation du moyen indicateur (12) en guise d'outil de rétroaction d'utilisateur pour l'optimisation de la qualité de l'installation.

15. Procédé selon l'une quelconque des revendications 12 à 14 comprenant une ou plusieurs parmi les étapes suivantes :
le traitement de paramètres de mesure tels que l'intensité de signal reçu à partir de l'unité détectrice (11) par rapport à la distance à la voie (2) mesurée pour aider l'utilisateur à déterminer si l'installation est optimale, suivi d'une session d'activation d'indicateur (12) pour transporter les informations ;
le réglage du courant de boucle au maximum pendant l'actionnement dans le mode installation et la coupure de la signalisation sur la boucle ; et
pendant l'actionnement dans un mode mesure le réglage du courant de boucle pour qu'il soit proportionnel à la valeur de mesure, tandis que le moyen indicateur (12) fournit des mises à jour sur l'état de dispositif (3) et la condition d'application.
